# EUROPÄISCHE PATENTSCHRIFT

(11) **EP 0 941 283 B1**
(45) Veröffentlichungstag und Bekanntmachung des Hinweises auf die Patenterteilung: **27.02.2002**
(21) Anmeldenummer: 97952773.6
(22) Anmeldetag: 17.11.1997
(51) Int. Cl.: C08K 13/02, C08L 75/04

(54) **FLAMMSCHUTZMITTEL FÜR POLYURETHANE, EIN VERFAHREN ZUR HERSTELLUNG FLAMMGESCHÜTZTER POLYURETHAN-KUNSTSTOFFE SOWIE DEREN VERWENDUNG IM SCHIENENFAHRZEUGBAU**
FLAME PROOFING AGENTS FOR POLYURETHANES, A METHOD FOR THE PRODUCTION OF FLAME PROOF POLYURETHANE PLASTICS AND THEIR USE IN RAIL VEHICLE CONSTRUCTION
AGENT IGNIFUGEANT POUR POLYURETHANNES, PROCEDE DE PRODUCTION DE MATIERES PLASTIQUES DU TYPE POLYURETHANNE IGNIFUGEES, ET UTILISATION DE CELLES-CI DANS LA CONSTRUCTION DE VEHICULES SUR RAIL

(30) Priorität: 28.11.1996 DE 19649279
(43) Veröffentlichungstag der Anmeldung: 15.09.1999
(73) Patentinhaber: Bayer Aktiengesellschaft, 51368 Leverkusen (DE)
(72) Erfinder: AVAR, Geza, D-51373 Leverkusen (DE); MÜNZMAY, Thomas, D-41539 Dormagen (DE); RUCKES, Andreas, D-40764 Langenfeld (DE); ZAPPEL, Ingo, D-51373 Leverkusen (DE)
(86) Internationale Anmeldenummer: EP9706393
(87) Internationale Veröffentlichungsnummer: WO9823678

(56) Entgegenhaltungen:
- EP-A- 0 377 891
- DATABASE WPI Section Ch, Week 8409 Derwent Publications Ltd., London, GB; Class A28, AN 84-051504 XP002060686 & JP 59 008 736 A (KANEBO LTD) , 18.Januar 1984
- DATABASE WPI Section Ch, Week 9404 Derwent Publications Ltd., London, GB; Class A13, AN 94-031907 XP002060687 & JP 05 339 417 A (ASAHI CHEM IND CO LTD) , 21.Dezember 1993
- DATABASE WPI Section Ch, Week 9348 Derwent Publications Ltd., London, GB; Class A12, AN 93-383181 XP002060688 & JP 05 287 119 A (ASAHI CHEM IND CO LTD) , 2.November 1993

## Beschreibung

Die Erfindung betrifft ein Flammschutzmittel zur Verbesserung des Brandverhaltens von Polyurethan-Kunststoffen, flammgeschützte Polyurethan-Kunsststoffe sowie deren Verwendung im Schienenfahrzeugbau.

Harte Integralschaumstoffe auf der Basis von Polyurethanen konnten bisher nicht im Schienenfahrzeugbau eingesetzt werden, da sie nicht die Anforderungen nach DIN 5510 erfüllen.

Die DIN 5510 ist ein Regelwerk, welches umfassend den vorbeugenden (passiven) Brandschutz in Schienenfahrzeugen regelt. Dazu werden die Fahrzeuge je nach Gefährdungsgrad in Brandschutzstufen von 1 bis 4 eingeteilt. Die Einstufung orientiert sich in erster Linie an den Fluchtmöglichkeiten der Passagiere im Brandfall. Danach sind beispielsweise Fahrzeuge, die überwiegend auf unterirdischen Strecken (Tunnel-, U-Bahnbetrieb) verkehren, mit den daraus resultierenden eingeschränkten Fluchtmöglichkeiten zwischen den Haltestationen, in eine höhere Brandschutzstufe einzuordnen als Fahrzeuge im oberirdischen Betrieb.

Weiterhin werden Brandverhalten bzw. Flammwidrigkeitsverhalten von Werkstoffen und Fertigteilen für den Schienenfahrzeugbau festgelegt. Die Anforderungen an die Flammwidrigkeit richten sich dabei nach
i) der Brandschutzstufe des Fahrzeugs,
ii) der Größe des Teiles und
iii) der Funktion und Einbaulage des Teiles im Fahrzeug.

Der Einsatz von harten PUR-Integralschaumstoffen im Schienenverkehr wäre ein technologischer und wirtschaftlicher Vorteil, wenn sie die Anforderungen der DIN 5510 (s.u.) erfüllen würden. Dies kann allerdings mit den bekannten halogenfreien Flammschutzmitteln (z.B. Ammoniumpolyphosphat, etc.) nicht erreicht werden.

Die Verwendung von Melamin als Flammschutzmittel ist z.B. bekannt aus EP-A-0 422 797, EP-A-0 428 258, EP-A-347 497, EP-A-0 450 403, EP-A-0 377 891, JP-A-7 292 055, US-A-36 81 273, US-A-38 97 372. Wie Untersuchungen gezeigt haben können aber durch den alleinigen Einsatz von Melamin die Erfordernisse der DIN 5510 nicht erfüllt werden.

Die Verwendung von Rotem Phosphor als Flammschutzmittel ist ebenfalls bekannt z.B. aus "Brandverhalten von Kunststoffen", Dr. Troitzsch, Carl-Hanser-Verlag München 1981, S. 64, "Kunststoffe" 79. Jahrgang 1989/11, Carl-Hanser-Verlag München, Halogenfreier Flammschutz mit Phosphorverbindungen, H. Staeneke, Hürth und D.J. Scharf, Coventry/USA. Aber auch durch den alleinigen Einsatz von Rotem Phosphor können - wie untersucht - die Anforderungen der DIN 5510 nicht erreicht werden.

Aus JP-A 5339417 und JP-A 5287119 gehen thermoplastische Harzzusammensetzungen hervor, die sowohl roten Phosphor als Triazinderivate wie Melamin enthalten. Als thermoplastisches Harz wird bevorzugt ein kantschukmodifiziertes Sturolpolimer eingesetzt.

Auch bei Verwendung von anderen Flammschutzmitteln wie sie z.B. beschrieben werden in Kunststoffe Brandprüfungen Flammschutzmittel Umweltfragen, Bestandsaufnahme und Perspektiven, Dr. Troitzsch, S. 21, Kunststoffe 79. Jahrgang 1989/11, Carl-Hanser-Verlag München, Halogenfreier Flammschutz mit Phosphorverbindungen, H. Staendeke, Hürth und D.J. Scharf, Coventry/USA, können bei alleinigem Einsatz die Erfordernisse der DIN 5510 nicht erfüllt werden.

Auch die bekannten Kombinationen von Melamin mit Phosphorsäurederivaten - wie in EP-A-0 377 891 beschrieben - führen nicht zum Erfolg.

Aufgabe der Erfindung ist es, flammgeschützte Polyurethan-Kunststoffe bereitzustellen, die für den Einsatz im Schienenfahrzeugbau bezüglich ihres Brandverhaltens geeignet sind.

Wie nun überraschend gefunden wurde, können durch den Zusatz eines Flammschutzmittels, bestehend aus einer Mischung aus Rotem Phosphor und Melamin und/oder Melaminderivaten in einem Gewichtsverhältnis 1:7,5 bis 1:100 flammgeschützte Polyurethan-Kunststoffe erhalten werden, die aufgrund ihres Brandverhaltens für den Einsatz in Schienenfahrzeugen geeignet sind. Erfindungsgemäß flammgeschützte Polyurethan-Kunststoffe entsprechen den Anforderungen der DIN 5510. Es ist überraschend, daß dies gerade durch dieses Gewichtsverhältnis von Rotem Phosphor und Melamin bzw. Melaminderivat erreicht wird, zumal andere Mengenverhältnisse sich als unbrauchbar erwiesen.

Gegenstand der Erfindung ist daher ein Polyurethan-Kunststoff enthaltend Roten Phosphor und Melamin und/oder Melaminderivate in einem Gewichtsverhältnis von 1:7,5 bis 1:100, bezogen auf den Roten Phosphor.

Bevorzugt beträgt das Gewichtsverhältnis 1:10 bis 1:40.

Es können Melamin oder Melaminderivate wie z.B. Melamincyanurat, Melaminphosphat, Melaminborat, Melaminoxalat, Melaminfomiad, Melaminpyrophosphat, Dimelaminphosphat usw. eingesetzt werden.

Ein weiterer Gegenstand der Erfindung ist ein Verfahren zur Herstellung flammgeschützter Polyurethan-Kunststoffe, bei dem man
A) organische Polyisocyanate mit
B) Verbindungen mit mindestens zwei gegenüber Isocyanaten reaktionsfähigen Wasserstoffatomen von einem Molekulargewicht von 250 bis 12.500
   B1) gegebenenfalls Vernetzern mit mindestens zwei gegenüber Isocyanaten reaktionsfähigen Wasserstoffatomen von einem Molekulargewicht von 32 bis 249,
   B2) gegebenenfalls Füllstoffen, Treibmitteln, Stabilisatoren, Aktivatoren und/oder weiteren an sich bekannten Hilfs- und Zusatzstoffen in Gegenwart von
   C) einem Gemisch aus Rotem Phosphor und Melamin und/oder Melaminderivat mit einem Gewichtsverhältnis von Rotem Phosphor zu Melamin und/oder Melaminderivat von 1:7,5 bis 1:100 umsetzt.

Bevorzugt wird das Gemisch C) in einem Gewichtsverhältnis, bezogen zu den übrigen Komponenten A) und B) bzw. A) und B1) und/oder B2), von 10:90 bis 50:50, bevorzugt von 15:85 bis 30:70, eingesetzt.

Als organische Polyisocyanate a) können eingesetzt werden:
Polyisocyanate, wie sie z.B. von W. Siefken in Justus Liebigs Annalen der Chemie, 562, Seiten 75 bis 136, beschrieben werden, beispielsweise solche der Formel

Q(NCO)ₙ

in der
- n: 2 bis 4, vorzugsweise 2 bis 3 und
- Q: einen aliphatischen Kohlenwasserstoffrest mit 2 bis 18, vorzugsweise 6 bis 10, C-Atomen, einen cycloaliphatischen Kohlenwasserstoffrest mit 4 bis 15, vorzugsweise 5 bis 10, C-Atomen, einem aromatischen Kohlenwasserstoffrest mit 6 bis 15, vorzugsweise 6 bis 13, C-Atomen oder einen araliphatischen Kohlenwasserstoffrest mit 8 bis 15, vorzugsweise 8 bis 13, C-Atomen bedeuten, z.B. solche Polyisocyanate, wie sie in der DE-OS 28 32 253, Seiten 10 bis 11, beschrieben werden.

Es werden in der Regel die technisch leicht zugänglichen Polyisocyanate, z.B. das 2,4- und 2,6-Toluylendiisocyanat sowie beliebige Gemische dieser Isomeren ("TDI"), Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), z.B. modifizierte Polyisocyanate, die sich vom 2,4- und 2,6-Toluylendiisocyanat bzw. vom 4,4'- und/oder 2,4'-Diphenylmethandiisocyanat ableiten. Bevorzugt wird Diisocyanato-diphenylmethan (MDI) als reines MDI-Monomer oder im Gemisch mit seinen höhekernigen Hostologen als MDI-Polymer eingesetzt.

Als Ausgangskomponente B) finden Verbindungen mit mindestens zwei gegenüber Isocyanaten reaktionsfähigen Wasserstoffatomen und einem Molekulargewicht in der Regel von 250 bis 12.500 g/mol Verwendung. Hierunter versteht man neben Aminogruppen, Thiolgruppen oder Carboxylgruppen aufweisenden Verbindungen vorzugsweise Hydroxylgruppen aufweisende Verbindungen, vorzugsweise Polyether, Polyester, Polycarbonate, Polylactone und Polyamide, insbesondere 2 bis 8 Hydroxylgruppen aufweisende Verbindungen, speziell solche vom Molekulargewicht 250 bis 10,000, z.B. derartige, mindestens 2, in der Regel 2 bis 8, vorzugsweise 2 bis 4, Hydroxylgruppen aufweisende Verbindungen, wie sie für die Herstellung von homogenen und von zellförmigen Polyurethanen an sich bekannt sind und wie sie z.B. in der DE-OS 28 32 253, Seiten 11 bis 18, beschrieben werden. Auch Gemische verschiedener derartiger Verbindungen kommen erfindungsgemäß in Frage.

Die gegebenenfalls verwendeten Vernetzer-Komponenten sind ebenfalls Verbindungen mit mindestens zwei gegenüber Isocyanaten reaktionsfähigen Wasserstoffatomen und einem Molekulargewicht von 32 bis 249. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 28 32 253, Seiten 19 bis 20, beschrieben.

Gegebenenfalls als Komponente B2) mitverwendet werden Füllstoffe, Treibmittel, Stabilisatoren, Aktivatoren und weitere an sich bekannte Hilfs- und Zusatzstoffe, wie Emulgatoren, Reaktionsverzögerer, Zellregler, Weichmacher, Farbstoffe sowie fungistatisch und bakteriostatisch wirksame Substanzen. Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Als gegebenenfalls mitzuverwendende Treibmittelkomponente finden die üblicherweise für das Aufschäumen von Polyurethanhartschaumstoffen eingesetzten Treibmittel Verwendung.

Beispiele für derartige Treibmittel sind Alkane wie n-Pentan, iso-Pentan, Gemische aus iso- und n-Pentan, Cyclopentan, Cyclohexan, Mischungen aus Butanisomeren und den genannten Alkanen, teilhalogenierte Fluorchlorkohlenwasserstoffe wie 1,1,1-Dichlorfluorethan (R 141b), teilfluorierte Kohlenwasserstoffe wie 1,1,1,3,3,3-Hexafluorbutan (R 356) oder 1,1,1,3,3-Pentafluorpropan (R 245 fa).

Die erfindungsgemäß flammgeschützten Polyurethan-Kunststoffe können als Elastomere durch Gießen, als Hart- oder Weichsäume in kontinuierlicher oder diskontinuierlicher Herstellungsweise oder als geschäumte oder massive Formartikel hergestellt werden.

Für den Fall, daß zellige Formkörper hergestellt werden sollen, wird die Verschäumung üblicherweise in geschlossenen Formen durchgeführt. Dabei wird das Reaktionsgemisch in eine Form eingetragen. Als Formmaterial kommt Metall, z.B. Aluminium, oder Kunststoff, z.B. Epoxidharz, in Frage. In der Form schäumt das schaumfähige Reaktionsgemisch auf und bildet den Formkörper. Die Formverschäumung kann dabei so durchgeführt werden, daß das Formteil an seiner Oberfläche Zellstruktur aufweist. Sie kann aber auch so durchgeführt werden, daß das Formteil eine kompakte Haut und einen zelligen Kern aufweist. In diesem Zusammenhang kann man so vorgehen, daß man in die Form so viel schaumfähiges Reaktionsgemisch einträgt, daß der gebildete Schaumstoff die Form gerade ausfüllt. Man kann aber auch so arbeiten, daß man mehr schaumfähiges Reaktionsgemisch in die Form einträgt, als zur Ausfüllung des Forminneren mit Schaumstoff notwendig ist. Im letztgenannten Fall wird somit unter "overcharging" gearbeitet; eine derartige Verfahrensweise ist z.B. aus den US-PS3 178 490 und 3 182 104 bekannt.

Selbstverständlich können erfindungsgemäße Schaumstoffe auch durch Blockverschäumung oder nach dem an sich bekannten Doppeltransportbandverfahren hergestellt werden.

Bevorzugt werden erfindungsgemäße Schaumstoffe als Integralschaumstoffe nach dem RIM (Reaction-Injection-Moulding) Verfahren hergestellt.

Die erfindungsgemäßen Polyurethan-Kunststoffe zeigen ein überraschend gutes Brandverhalten und eignen sich daher für den Einsatz im Schienenfahrzeugbau. Sie entsprechen bezüglich ihres Brandverhaltens den Anforderungen der DIN 5510.

Ein weiterer Gegenstand der Erfindung ist daher die Verwendung der vorstehend beschriebenen Polyurethan-Kunststoffe im Schienenfahrzeugbau.

Die nachfolgenden Beispiele sollen die Erfindung erläutern, ohne sie jedoch in ihrem Umfang zu begrenzen.

### Beispiele

### Ausführungsbeispiele 1 bis 3

| Rezeptur: | |
|---|---|
| Baydur 6110 B | 100 Gew.-Teile |
| Roter Phosphor/Melamin | 60 bis 80 Gew.-Teile |
| Desmodur 44 V 10 | 135 Gew.-Teile |

Die Prüfplatten wurden in Rohdichte 700 kg/m³ und mit einer Dicke von 10 mm hergestellt. Sie erfolgte auf einem Rimdomaten elektronisch gesteuerten Hochdruckkolbendosiergerät. Die Herstellung erfolgte auf einem RIMDOMATEN der Fa. Hennecke (Deutschland, St. Agustin).

### Ausführungsbeispiele 4 bis 6

| Rezeptur: | |
|---|---|
| Baydur VP PU 1598 | 100 Gew.-Teile |
| Roter Phosphor/Melamin | 60 bis 80 Gew.-Teile |
| Desmodur 44 V 10 | 113 Gew.-Teile |

Für die Ausführungsbeispiele 4 bis 6 wurden Prüfplatten in Rohdichte 1200 kg/m³ und mit einer Dicke von 4 mm gefertigt. Sie erfolgte ebenfalls auf einem Rimdomaten.

Bei den Versuchen der Ausführungsbeispiele 1 bis 6 wurden der Roter Phosphor in Form einer 50 %igen Paste (Carrier: Rizinusöl, Hostaflam AP 750, Hersteller: Fa. Hoechst) und Melamin als Pulver mit einer Korngröße von d 99 175-200 µm (Hersteller: Fa. DSM) eingesetzt.

### Prüfung des Brandverhaltens

Die Prüfung des Brandverhaltens von Werkstoffen und Ferrigteilen erfolgt nach DIN 54 837. In einem Beflammungstest werden die Brennbarkeitsklasse (S), die Rauchentwicklungsklasse (SR) und die Tropfbarkeitsklasse (ST) bestimmt. Für die Einstufung in die Brennbarkeitsklassen wird sowohl der Umfang der Zerstörung während der Beflammung als auch die Nachbrenndauer nach Ende der Beflammung berücksichtigt.

**Tabelle 1**

| Einstufungskriterien für Brennbarkeitsklassen (S) nach DIN 5510 | | |
|---|---|---|
| Brennbarkeitsklasse | Zerstörte Länge | Nachbrenndauer |
| S2 nicht erreicht | > 30 cm | beliebig |
| S2 | ≤ 30 cm | beliebig |
| S3 | ≤ 25 cm | ≤ 100 s |
| S4 | ≤20 cm | ≤10 s |
| S5 | 0 cm | 0 s |

Zur Ermittlung der Rauchentwicklungsklasse wird die integrale Lichtschwächung über die gesamte Versuchsdauer gemessen.

**Tabelle 2**

| Einstufungskriterien für Rauchentwicklungsklasse (SR) nach DIN 5510 | |
|---|---|
| Rauchentwicklungsklasse | Integrale Lichtschwächung |
| SR 1 | ≤ 100 % * min |
| SR 2 | ≤ 50 % * min |

Die Beurteilung der Tropfbarkeitsklassen erfolgt nach den Kriterien nicht tropfen, tropfend bzw. tropft brennend ab. Das Abtropfverhalten der Polyurethane wird weniger von Flammschutzmitteln beeinflußt sondern ist eine Materialeigenschaft, die durch die chemische Struktur vorgegeben ist. Die hier untersuchten Baydur-Typen sind so stark vernetzt, daß der Tropftest in der Regel problemlos bestanden wird.

**Tabelle 3**

| Einstufungskriterien für Tropfbarkeitsklassen (ST) nach DIN 5510 | |
|---|---|
| Tropfbarkeitsklasse | Beobachtung |
| ST 1 | tropft brennend |
| ST 2 | tropft nicht oder tropft nicht brennend ab* |

| | |
|---|---|
| * Maximale Nachbrenndauer 20 s. | |

Um einen breiten Einsatzbereich mit PUR-Integralhartschaumstoffen zu realisieren muß eine Einstufung nach S4, SR2, ST2 erreicht werden.

### Kurzbeschreibung des Verfahrens nach DIN 54837

In einem Brennkasten oder einem entsprechend geänderten Brandschacht wird ein senkrecht angeordneter Probekörper der Flamme eines Gasbrenners mit Breitschlitzaufsatz ausgesetzt. Dabei werden die durch Brand zerstörten Längen der Probekörper und die Rauchbildung und das Tropfverhalten bestimmt.

Es werden 5 Prüfkörper mit den Maßen 500 mm x 190 mm x d eingesetzt.

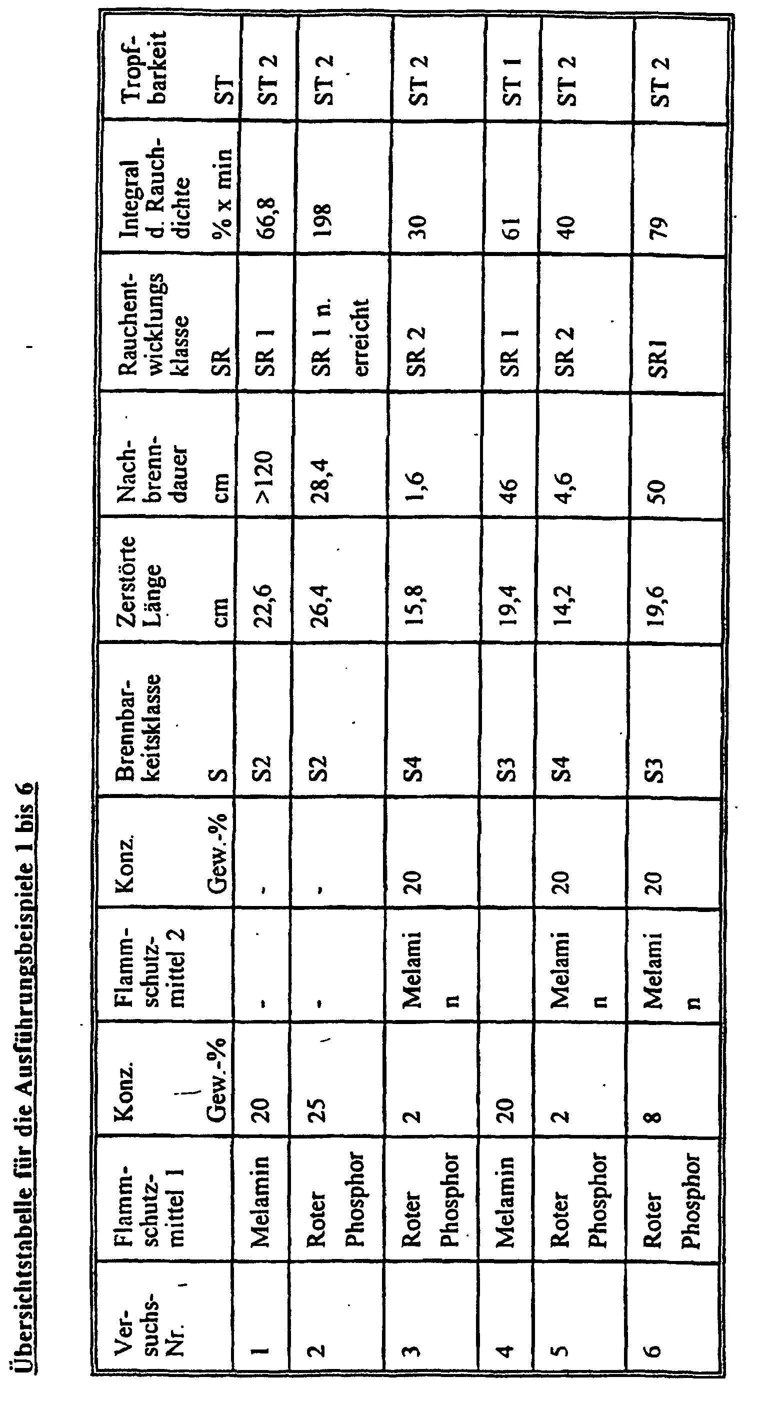

## Patentansprüche

1. Polyurethan-Kunststoff, enthaltend Roten Phosphor und Melamin und/oder Melaminderivate in einem Gewichtsverhältnis von 1:7,5 bis 1:100.

2. Polyurethan-Kunststoff gemäß Anspruch 1, **dadurch gekennzeichnet, daß** das Gewichtsverhältnis von Rotem Phosphor zu Melamin und/oder Melaminderivat 1:10 bis 1:40 beträgt.

3. Polyurethan-Kunststoff gemäß einem der vorherigen Ansprüche, **dadurch gekennzeichnet, daß** als Melaminderivat, Melaminborat, Melaminoxalat, Melaminformiat, Melaminpyrophosphat und/oder Dimelaminphosphat enthalten ist.

4. Verfahren zur Herstellung flammgeschützter Polyurethan-Kunststoffe, bei dem man
A) organische Polyisocyanate mit
B) Verbindungen mit mindestens zwei gegenüber Isocyanaten reaktionsfähigen Wasserstoffatomen von einem Molekulargewicht von 250 bis 12.500,
B1) gegebenenfalls Vernetzern mit mindestens zwei gegenüber Isocyanaten reaktionsfähigen Wasserstoffatomen von einem Molekulargewicht von 32 bis 249,
B2) gegebenenfalls Füllstoffen, Treibmitteln, Stabilisatoren, Aktivatoren und/oder weiteren an sich bekannten Hilfs- und Zusatzstoffen in Gegenwart von
C) einem Gemisch aus Rotem Phosphor und Melamin und/oder Melaminderivat mit einem Gewichtsverhältnis von Rotem Phosphor zu Melamin und/oder Melaminderivat von 1:7,5 bis 1:100 umsetzt.

5. Verfahren gemäß Anspruch 4, **dadurch gekennzeichnet, daß** Roter Phosphor in Form einer Paste oder Pulver und Melamin als Pulver mit einer Korngröße im Bereich von 150 bis 350 µm eingesetzt wird.

6. Verfahren gemäß Anspruch 4 oder 5, **dadurch gekennzeichnet, daß** das Gemisch C) in einem Gewichtsverhältnis, bezogen auf die Summe der übrigen Komponenten, von 10:90 bis 50:50 eingesetzt wird.

7. Verfahren gemäß einem der Ansprüche 4 bis 6, **dadurch gekennzeichnet, daß** Polymer-MDI-diisocyanat als Polyisocyanat eingesetzt wird.

8. Verfahren gemäß einem der Ansprüche 4 bis 7, **dadurch gekennzeichnet, daß** Polyurethan-Integralschaumstoffe hergestellt werden.

9. Polyurethan-Kunststoffe, gemäß einem der Ansprüche 4 bis 8 hergestellt, **dadurch gekennzeichnet, daß** die Polyurethan-Kunststoffe die Brandschutzanforderungen gemäß der DIN 5510 erfüllen.

10. Verwendung des Polyurethan-Kunststoffe gemäß einem der Ansprüche 1 bis 3 oder der gemäß einem der Ansprüche 4 bis 8 hergestellten Polyurethan-Kunststoffe im Schienenfahrzeugbau.

## Claims

1. Polyurethane plastic containing red phosphorus and melamine and/or melamine derivatives in a weight ratio of 1:7.5 to 1:100.

2. Polyurethane plastic according to claim 1, **characterised in that** the weight ratio of red phosphorus to melamine and/or melamine derivative is 1:10 to 1:40.

3. Polyurethane plastic according to one of the preceding claims, **characterised in that** it contains melamine borate, melamine oxalate, melamine formate, melamine pyrophosphate and/or dimelamine phosphate as melamine derivative.

4. Process for producing flameproof polyurethane plastics, wherein
A) organic polyisocyanates are reacted with
B) compounds having a molecular weight of 250 to 12,500 and possessing at least two hydrogen atoms which are reactive with isocyanates,
B1) optionally cross-linking agents having a molecular weight of 32 to 249 and possessing at least two hydrogen atoms which are reactive with isocyanates,
B2) optionally fillers, blowing agents, stabilisers, activators and/or other known per se auxiliary substances and additives in the presence of
C) a mixture of red phosphorus and melamine and/or melamine derivative having a weight ratio of red phosphorus to melamine and/or melamine derivative of 1:7.5 to 1:100.

5. Process according to claim 4, **characterised in that** red phosphorus is used in the form of a paste or powder and melamine is used as powder having a particle size within the range of 150 to 350 µm.

6. Process according to claim 4 or 5, **characterised in that** the mixture C) is used in a weight ratio, based on the sum of the remaining components, of 10:90 to 50:50.

7. Process according to one of claims 4 to 6, **characterised in that** MDI diisocyanate polymer is used as polyisocyanate.

8. Process according to one of claims 4 to 7, **characterised in that** polyurethane integral foams are used.

9. Polyurethane plastics produced according to one of claims 4 to 8, **characterised in that** the polyurethane plastics comply with the fire protection requirements according to DIN 5510.

10. Use of the polyurethane plastics according to one of claims 1 to 3 or of the polyurethane plastics produced according to one of claims 4 to 8 in rail vehicle construction.

## Revendications

1. Matière plastique de type polyuréthane, contenant du phosphore rouge et de la mélamine et/ou des dérivés de mélamine en un rapport en masse de 1:7,5 à 1:100.

2. Matière plastique de type polyuréthane selon la revendication 1, **caractérisée en ce que** le rapport en masse du phosphore rouge à la mélamine et/ou au dérivé de mélamine est de 1:10 à 1:40.

3. Matière plastique de type polyuréthane selon l'une des revendications précédentes, **caractérisée en ce qu'**elle contient comme dérivé de mélamine du borate de mélamine, de l'oxalate de mélamine, du formate de mélamine, du pyrophosphate de mélamine et/ou du phosphate de dimélamine.

4. Procédé de préparation de matières plastiques de type polyuréthane ignifugées, dans lequel on fait réagir
A) des polyisocyanates organiques avec
B) des composés ayant au moins deux atomes d'hydrogène réagissant avec les isocyanates et ayant une masse molaire de 250 à 12 500,
B1) éventuellement des agents réticulants ayant au moins deux atomes d'hydrogène réagissant avec les isocyanates et ayant une masse molaire de 32 à 429,
B2) éventuellement des charges, des agents gonflants, des stabilisants, des activateurs et/ou d'autres agents auxiliaires et additifs connus en soi, en présence
C). d'un mélange de phosphore rouge et de mélamine et/ou d'un dérivé de mélamine ayant un rapport en masse du phosphore rouge à la mélamine et/ou au dérivé de mélamine de 1:7,5 à 1:100.

5. Procédé selon la revendication 4, **caractérisé en ce que** l'on utilise le phosphore rouge sous forme d'une pâte ou d'une poudre et la mélamine sous forme d'une poudre ayant une taille de grains comprise entre 150 et 350 µm.

6. Procédé selon la revendication 4 ou 5, **caractérisé en ce que** l'on utilise le mélange C) en un rapport en masse, par rapport à la somme des autres constituants, de 10:90 à 50:50.

7. Procédé selon l'une des revendications 4 à 6, **caractérisé en ce que** l'on utilise du diisocyanate MDI polymère comme polyisocyanate.

8. Procédé selon l'une des revendications 4 à 7, **caractérisé en ce que** l'on prépare des mousses intégrales de polyuréthane.

9. Matières plastiques de type polyuréthane préparées selon l'une des revendications 4 à 8, **caractérisées en ce que** les matières plastiques de type polyuréthane remplissent les exigences de protection contre le feu de la norme DIN 5510.

10. Utilisation des matières plastiques de type polyuréthane selon l'une des revendications 1 à 3 ou des matières plastiques de type polyuréthane préparées selon l'une des revendications 4 à 8 dans la construction de véhicules sur rail.
